# FASCICULE DE BREVET EUROPEEN

(11) **EP 3 924 070 B1**
(45) Date de publication et mention de la délivrance du brevet: **28.09.2022**
(21) Numéro de dépôt: 20715890.8
(22) Date de dépôt: 03.04.2020
(51) Int. Cl.: A63B 27/00, A62B 35/00, A63B 29/02, F16B 45/02

(54) **CONNECTEUR, FAUSSE FOURCHE LARGABLE MUNI D'UN TEL CONNECTEUR ET PROCÉDÉ D'UTILISATION**
VERBINDER, LÖSBARE GABELATTRAPPE MIT EINEM SOLCHEN VERBINDER UND BETRIEBSVERFAHREN
CONNECTOR, RELEASABLE DUMMY FORK PROVIDED WITH SUCH A CONNECTOR AND OPERATING METHOD

(30) Priorité: 03.04.2019 FR 1903596
(43) Date de publication de la demande: 22.12.2021
(73) Titulaire: Zedel, 38920 Crolles (FR)
(72) Inventeur: TARRAJAT, Jules, 38920 Crolles (FR); VUILLERMOZ, Benoît, 38400 Saint Martin d'Heres (FR); PILOTTE, Maurice, Beauharnois Québec J6N 2K6 (CA)
(74) Mandataire: Talbot, Alexandre
(86) Numéro de dépôt international: PCT/EP2020/059691
(87) Numéro de publication internationale: WO 2020/201570

(56) Documents cités:
- DE-A1- 10 220 758
- GB-A- 2 047 382
- US-A1- 2006 185 934
- US-A1- 2015 345 539

## Description

### Domaine technique

L'invention concerne un connecteur ouvrable, une fausse fourche largable et un dispositif de remontée sur élément filaire muni d'une telle fausse fourche largable et un procédé d'utilisation du dispositif de remontée sur élément filaire.

### Technique antérieure

Dans le domaine de l'élagage, il est connu d'utiliser une fausse fourche qui définit un système d'ancrage temporaire. La fausse fourche est formée par une sangle qui étrangle une branche ou le tronc d'un arbre. La fausse fourche possède une sangle munie de première et deuxième extrémités opposées et d'un anneau central. L'anneau central coopère avec la première extrémité de sorte que la première extrémité passe dans l'anneau de la sangle pour former une boucle coulissante qui entoure une branche ou le tronc de l'arbre. La première extrémité sert de point d'ancrage pour le grimpeur. Le grimpeur applique une force sur la première extrémité ce qui étrangle la branche de l'arbre en refermant la boucle coulissante. La première extrémité de la sangle est associée à un premier anneau métallique et la deuxième extrémité est associée à un deuxième anneau métallique dont la dimension interne est inférieure à celle du premier anneau métallique.

Le grimpeur installe sa corde de travail dans les premier et deuxième anneaux métalliques qui sont connectés à la branche de l'arbre pour former un point d'ancrage.

Une fois le travail d'élagage terminé, il est nécessaire de récupérer la sangle formant la fausse fourche.

Pour la récupération de la fausse fourche, le cochonnet de récupération est fixé à la corde de travail puis la corde de travail est tirée pour s'extraire hors des deux anneaux métalliques. Le cochonnet de récupération passe au travers du premier anneau métallique et se coince dans le deuxième anneau métallique de sorte que la traction appliquée sur la corde tire sur la deuxième extrémité de la sangle et ouvre la boucle coulissante.

Une fois la boucle de sangle ouverte, il est possible de faire tomber la sangle de l'arbre en tirant sur la corde de travail fixée à la sangle par le cochonnet de récupération.

Il apparaît qu'à l'usage cette solution n'est pas satisfaisante car il courant que la fausse fourche reste coincée et notamment dans l'arbre. Cela provient notamment de tous les frottements qui existent entre l'arbre, la sangle et la corde de travail. Il existe un besoin de réduire le risque de coincement de la fausse fourche dans l'arbre pour faciliter la récupération du dispositif formant la fausse fourche.

Le document US 2015/345539 divulgue un dispositif selon le préambule de la revendication 1.

### Objet de l'invention

L'invention a pour but de remédier à ces inconvénients et, en particulier, de proposer un connecteur ouvrable dont l'ouverture est autorisée lorsque l'extrémité de la corde de travail est détectée.

Selon l'invention, ce but est atteint par un connecteur comprenant :
- un premier anneau monté ouvrable et muni d'un bloqueur coopérant avec une tige, la tige étant montée mobile entre une première position de tige où le premier anneau est fermé et une deuxième position de tige où le premier anneau est ouvert, le bloqueur étant monté mobile entre une première position de bloqueur coopérant avec la tige dans la première position de tige pour maintenir fermé le premier anneau et une deuxième position de bloqueur autorisant l'ouverture du premier anneau ;
- un deuxième anneau distinct du premier anneau, le deuxième anneau étant à section variable au moyen d'un palpeur, le palpeur étant monté mobile par rapport à une zone de glissement du deuxième anneau ;
   connecteur dans lequel le palpeur est connecté au bloqueur de sorte que lorsque la distance entre le palpeur et la zone de glissement est supérieure à une valeur seuil, le palpeur maintient le bloqueur dans la première position de bloqueur et lorsque la distance entre le palpeur et la zone de glissement est inférieure à une valeur seuil, le palpeur autorise le déplacement du bloqueur vers la deuxième position de bloqueur.

Préférentiellement, un ressort est configuré pour déplacer le palpeur vers la zone de glissement.

Selon un développement de l'invention, la tige est mobile en rotation entre la première position de tige et la deuxième position de tige.

De manière avantageuse, le palpeur est mobile en translation selon une première direction au-delà de la distance seuil et mobile en translation selon une deuxième direction sécante à la première direction à la distance seuil et dans lequel la translation du palpeur selon la deuxième direction cause le déplacement du bloqueur entre la première position et la deuxième position de bloqueur.

De manière avantageuse, la zone de glissement est formée par une poulie.

Préférentiellement, le connecteur comporte un élément filaire additionnel ayant une première extrémité fixée à un corps muni du premier anneau ouvrable et du deuxième anneau distinct, l'élément filaire additionnel ayant une deuxième extrémité fixée au premier anneau ouvrable.

L'invention a également pour objet une fausse fourche qui comporte un connecteur selon l'un des modes de réalisation précédent et avantageusement qui comporte un dispositif de blocage de deux brins de l'élément filaire additionnel pour définir un anneau d'élément filaire additionnel.

L'invention a encore pour objet un dispositif de remontée sur élément filaire comportant une fausse fourche selon la configuration précédente et un élément filaire associé à un cochonnet de récupération, l'élément filaire passant à travers le deuxième anneau, l'élément filaire possédant une dimension latérale supérieure à la distance seuil, le cochonnet de récupération possédant une dimension latérale supérieure à la distance seuil et le cochonnet de récupération étant séparé de l'élément filaire par un second élément filaire ayant une dimension latérale inférieure à la distance seuil.

L'invention a également pour objet une utilisation d'un dispositif de remontée sur élément filaire comportant les étapes suivantes :
Selon l'invention, ce but est atteint par un procédé d'utilisation d'un dispositif de remontée sur élément filaire comportant successivement :
- fournir un dispositif de remontée sur élément filaire selon la configuration précédente ;
- déplacer l'élément filaire dans le deuxième anneau de sorte que palpeur quitte l'élément filaire pour le deuxième élément filaire et que le bloqueur autorise l'ouverture du premier anneau ouvrable.

Dans un développement, l'élément filaire est associé à un cochonnet de récupération. Un effort appliqué sur l'élément filaire pour extraire l'élément filaire hors du connecteur entraine la mise en contact du cochonnet de récupération avec le palpeur et le déplacement du palpeur vers l'arrière du connecteur pour ouvrir le premier anneau.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre, de manière schématique, en coupe transversale dans le plan AA de la figure 2, un connecteur muni d'un élément filaire dans le deuxième anneau ;
- la figure 2 illustre, de manière schématique, en vue de côté, un connecteur muni d'un élément filaire dans le deuxième anneau ;
- la figure 3 illustre, de manière schématique, en vue de profil, un connecteur muni d'un élément filaire dans le deuxième anneau ;
- la figure 4 illustre, de manière schématique, en coupe transversale dans le plan AA de la figure 5, un connecteur muni d'un élément filaire additionnel dans le deuxième anneau ;
- la figure 5 illustre, de manière schématique, en vue de côté, un connecteur muni d'un élément filaire additionnel dans le deuxième anneau ;
- la figure 6 illustre, de manière schématique, en vue de profil, un connecteur muni d'un élément filaire dans le deuxième anneau ;
- la figure 7 illustre, de manière schématique, en coupe transversale dans le plan AA de la figure 8, un connecteur muni d'un cochonnet de récupération dans le deuxième anneau ;
- la figure 8 illustre, de manière schématique, en vue de côté, un connecteur muni d'un cochonnet de récupération dans le deuxième anneau ;
- la figure 9 illustre, de manière schématique, en vue de profil, un connecteur muni d'un cochonnet de récupération dans le deuxième anneau ;
- la figure 10 illustre, de manière schématique, en coupe transversale, un connecteur muni d'un cochonnet de récupération appuyant sur un palpeur ;
- la figure 11 illustre, de manière schématique, en vue de côté, un connecteur muni d'un cochonnet de récupération appuyant sur un palpeur ;
- la figure 12 illustre, de manière schématique, en vue de profil, un connecteur muni d'un cochonnet de récupération appuyant sur un palpeur ;

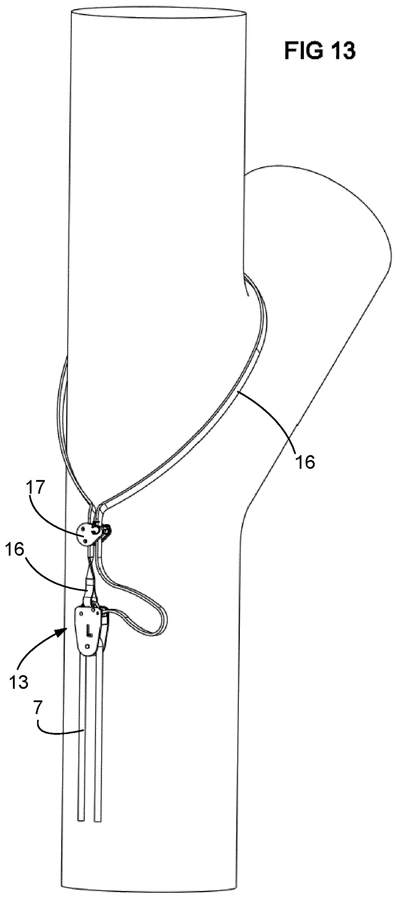

- la figure 13 illustre, de manière schématique, un dispositif de remontée sur corde avec une fausse fourche muni d'un connecteur.

### Description des modes de réalisation

Pour réaliser l'élagage d'un arbre, il est intéressant d'avoir un dispositif de remontée sur élément filaire qui possède un point d'ancrage sur l'arbre à élaguer ou sur un arbre proche. Afin de ne pas abimer l'arbre à cause du point d'ancrage, il est avantageux d'utiliser une sangle ou une corde définissant une fausse fourche. La sangle/corde passe autour d'une branche ou du tronc de l'arbre pour former le point d'ancrage à l'élément filaire qui sera utilisé pour les opérations d'élagage.

L'utilisation d'une fausse fourche est connue de l'art antérieur. La fausse fourche est formée par une sangle associée à ses deux extrémités opposées à deux anneaux métalliques ayant des dimensions différentes afin qu'un seul de ces anneaux puisse coopérer avec un cochonnet de récupération pour le bloquer. Cependant, une telle configuration n'est pas pratique à utiliser car les frottements qui existent entre l'arbre, les cordes et la sangle formant le point d'ancrage font que la fausse fourche reste souvent coincée dans l'arbre à la fin de l'opération d'élagage.

Il est donc proposé une configuration différente de fausse fourche qui possède un connecteur ouvrable. Il existe de nombreuses configurations différentes de connecteurs ouvrables tels que des mousquetons ou des maillons rapides, mais il faut être en contact direct du connecteur pour pouvoir l'ouvrir ce qui est impossible dans la configuration de la fausse fourche pour l'élagage.

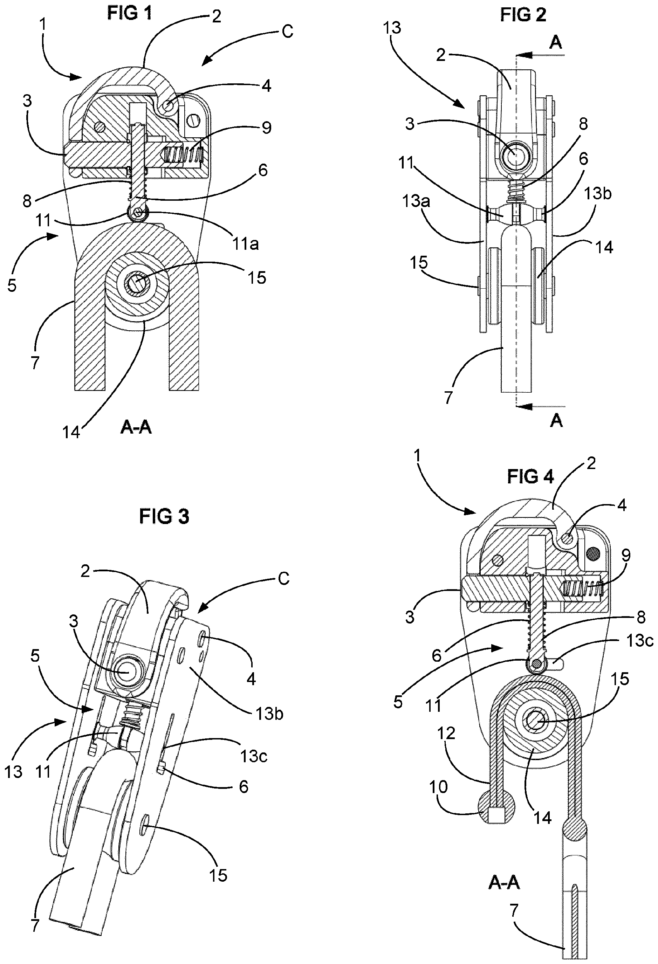

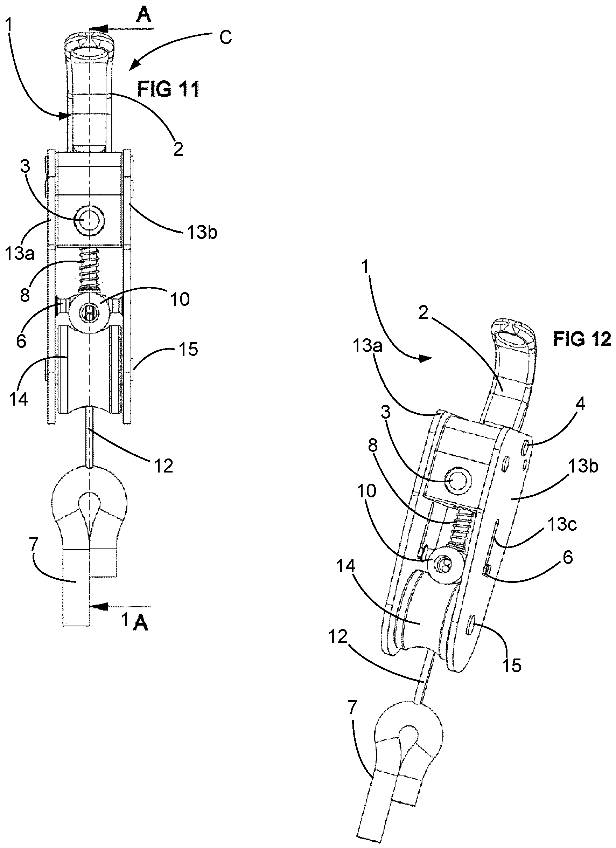

Le connecteur selon l'invention est un connecteur ouvrable qui définit deux anneaux distincts. Un mode de réalisation de connecteur est illustré aux figures 1 à 12 dans différents états. Le connecteur définit un premier anneau 1 qui est un premier anneau ouvrable. Le premier anneau 1 est en partie formé par une tige 2 qui coopère avec un bloqueur 3. La tige 2 est montée mobile entre une première position de tige 2 où le premier anneau 1 est fermé et une deuxième position de tige 2 où le premier anneau 1 est ouvert. Le déplacement de la tige 2 entre ses première et deuxième positions définit les deux états opposés du premier anneau 1 ouvrable.

Selon les configurations, la tige 2 est montée mobile en rotation, en translation ou selon un autre mouvement pouvant par exemple combiner une translation et une rotation. Dans le mode de réalisation illustré aux figures 1 à 12, la tige 2 est montée mobile autour d'un arbre 4.

Le bloqueur 3 est monté mobile entre une première position de bloqueur et une deuxième position de bloqueur. Dans la première position de bloqueur, le bloqueur 3 coopère avec la tige 2 qui se trouve dans la première position de tige pour maintenir fermé le premier anneau 1. Par exemple, la tige 2 définit une cavité borgne ou traversante qui coopère avec le bloqueur 3 pour empêcher le déplacement de la tige 2 hors de la première position de tige 2 assurant la fermeture du premier anneau 1 ouvrable. En alternative, le bloqueur 3 définit une cavité qui coopère avec une partie saillante de la tige 2 pour empêcher l'ouverture du premier anneau 1 ouvrable.

Dans la deuxième position de bloqueur 3, le bloqueur 3 autorise l'ouverture du premier anneau 1 ouvrable. Avantageusement, dans la deuxième position de bloqueur 3, la tige 2 n'est pas en contact mécanique direct avec le bloqueur 3.

Il est particulièrement avantageux de prévoir que l'ouverture du premier anneau 1 s'effectue par rotation de la tige 2. Lorsque le premier anneau 1 ouvrable est sous charge, l'ouverture du premier anneau 1 ouvrable est plus aisée et la déformation de la tige 2 est réduite en comparaison d'une configuration avec une tige 2 mobile en translation. L'ouverture de l'anneau est également plus aisée. Lorsque la translation de la tige 2 ouvre le premier anneau 1, il est avantageux d'avoir un connecteur dont la masse est déséquilibrée pour entrainer la rotation du connecteur et libérer l'élément filaire additionnel retenu dans le premier anneau 1.

Le connecteur possède un deuxième anneau 5 distinct du premier anneau 1. Le deuxième anneau 5 est à section variable au moyen d'un palpeur 6. Le deuxième anneau 5 possède une zone de glissement qui est destinée à recevoir un élément filaire 7 supportant le grimpeur dans ses opérations d'élagage. Le palpeur 6 est monté mobile par rapport à la zone de glissement. Le palpeur 6 se déplace de sorte que la distance entre le palpeur 6 et la zone de glissement puisse évoluer. En fonctionnement, l'élément filaire 7 appuie sur la zone de glissement du deuxième anneau 5.

Le palpeur 6 est configuré pour comparer la dimension latérale de l'élément filaire 7 qui se trouve dans le deuxième anneau 5 par rapport à une valeur seuil qui est une distance seuil de séparation entre le palpeur 6 et la zone de glissement. Dans une première configuration illustrée aux figures 1 à 12, le palpeur 6 est associé à un ressort 8 qui est configuré pour déplacer le palpeur 6 vers la zone de glissement et donc définir une distance minimale entre le palpeur 6 et la zone de glissement. Dans une autre configuration qui peut être combinée à la précédente, le palpeur 6 possède une masse suffisante pour que la gravité ramène le palpeur 6 vers la zone de glissement.

Le palpeur 6 est connecté au bloqueur 3 de sorte que lorsque la distance entre le palpeur 6 et la zone de glissement est supérieure à une valeur seuil, le palpeur 6 maintient le bloqueur 3 dans la première position de bloqueur 3. Lorsque la distance entre le palpeur 6 et la zone de glissement est inférieure à la valeur seuil, le palpeur 6 autorise le déplacement du bloqueur 3 dans la deuxième position de bloqueur 3. La distance seuil correspond à une position seuil du palpeur 6 par rapport à la zone de glissement. Cette configuration permet d'améliorer la sécurité du connecteur. En d'autres termes, tant que le palpeur 6 est au-delà de la valeur seuil, le palpeur 6 empêche le bloqueur 3 de quitter la première position.

Comme illustré à la figure 1, dans un mode de réalisation particulier, le palpeur 6 se déplace en translation et cherche à se rapprocher de la zone de glissement.

Lorsqu'un élément filaire 7 ayant une dimension supérieure à la valeur seuil est présent dans le deuxième anneau 5, il déplace le palpeur 6 au delà de la position seuil. Une partie du palpeur 6 s'engage dans une cavité du connecteur qui empêche le déplacement du bloqueur 3. En alternative, il est possible de prévoir que le palpeur 6 se déplace uniquement en translation et s'insère dans une cavité du bloqueur 3 pour empêcher son déplacement vers la deuxième position. D'autres configurations sont possibles pour que la position du palpeur 6 empêche ou autorise le mouvement du bloqueur 3. Le palpeur est agencé pour mesurer la dimension latérale de l'élément filaire 7.

Le connecteur est destiné à fonctionner en coopération avec un élément filaire 7 ayant une dimension latérale supérieure à la valeur seuil. L'élément filaire 7 est par exemple une corde ayant un diamètre minimal ou une sangle ayant une épaisseur minimale supérieur à la valeur seuil. Ainsi, tant que l'élément filaire 7 est dans le deuxième anneau 5, le palpeur 6 est au delà de la position seuil et le bloqueur 3 est dans la première position ce qui maintient le premier anneau 1 dans la position fermée lorsque la tige 2 est dans la première position de tige 2. En d'autres termes, tant que l'élément filaire 7 est présent dans le deuxième anneau 5, le premier anneau 1 ne peut être ouvert.

Dans une configuration particulière non illustrée, lorsque l'élément filaire 7 quitte le deuxième anneau 5 ou lorsque la dimension latérale de l'élément filaire 7 devient inférieure à la valeur seuil, le palpeur 6 se déplace sous la position seuil ce qui déplace le bloqueur 3 et autorise l'ouverture du premier anneau 1 ouvrable. Par exemple, avec un premier anneau 1 qui est ouvrable par rotation, lorsque l'élément filaire 7 quitte le deuxième anneau 5, le poids du connecteur peut être suffisant pour déclencher l'ouverture du premier anneau 1 et donc désolidariser le connecteur de son point d'ancrage. Il est avantageux de prévoir que l'élément filaire 7 possède une première section supérieure à la valeur seuil et une deuxième section inférieure à la valeur seuil de manière obtenir l'ouverture du premier anneau 1 ouvrable tout en gardant un contact mécanique entre l'élément filaire 7 et le connecteur pour pouvoir tirer sur le connecteur avec l'élément filaire 7 lorsque le connecteur reste coincé.

Le bloqueur 3 peut se déplacer en rotation, en translation ou avec un mouvement quelconque entre la première position de bloqueur 3 et la deuxième position de bloqueur 3.

Afin d'améliorer le fonctionnement du connecteur, il est particulièrement avantageux de prévoir que le mouvement du bloqueur 3 depuis la première position de bloqueur jusqu'à la deuxième position de bloqueur soit dissocié du déplacement du palpeur 6 depuis une position au delà de la position seuil jusqu'à la position seuil. En d'autres termes, lorsque la position seuil est atteinte par le palpeur 6, l'ouverture du premier anneau 1 est possible mais n'est pas automatique. De manière avantageuse, le bloqueur 3 est associé à un ressort 9 qui maintient le bloqueur 3 dans la première position bloquant le premier anneau 1 en position fermée.

Il est particulièrement avantageux de prévoir que le déplacement de l'élément filaire 7 ou d'un cochonnet de récupération 10 associé à l'élément filaire 7 cause le déplacement du bloqueur 3 une fois que le palpeur 6 a atteint la position seuil. En d'autres termes, une fois que le palpeur 6 a atteint la position seuil, une action supplémentaire doit être réalisée pour effectuer le déplacement du bloqueur 3 et l'ouverture du premier anneau 1.

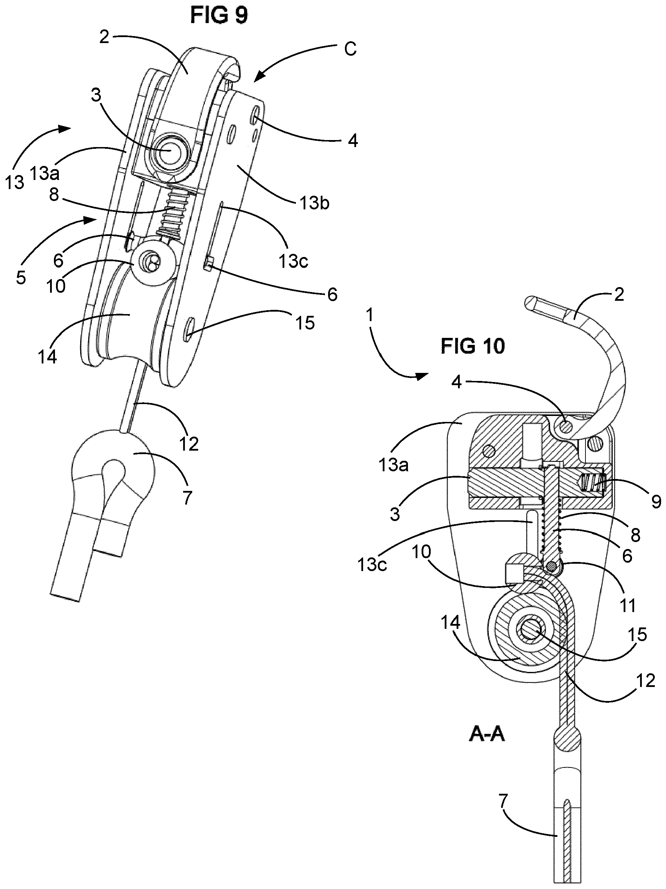

Dans un mode de réalisation préférentiel illustré aux figures 10 à 12, une fois la position seuil atteinte par le palpeur 6, le palpeur 6 s'étant déplacé selon une première direction, il est avantageux de déplacer le palpeur 6 selon une seconde direction sécante à la première direction. Le déplacement de l'élément filaire cause le déplacement du palpeur 6 et le déplacement du bloqueur 3 pour obtenir l'ouverture du premier anneau 1.

Le palpeur 6 peut être configuré pour avoir une partie rotative 11 qui devient fixe lorsque la position seuil est atteinte. La partie rotative 11 peut posséder des pointes qui viennent en contact de l'élément filaire. Lorsque la partie rotative 11 ne peut plus tourner sur elle-même, le déplacement de l'élément filaire cause le déplacement du palpeur 6 ce qui cause le déplacement du bloqueur 3 et l'ouverture du premier anneau 1. La partie rotative 11 peut être montée sur un arbre 11a dont la section n'est pas circulaire et qui glisse dans deux rainures ayant des dimensions différente, la première rainure correspond à la première direction et est plus large que la deuxième rainure qui correspond à la deuxième direction de déplacement du palpeur 6. La première rainure autorise la rotation de l'arbre et de la partie rotative 11 alors que la deuxième rainure interdit cette rotation. Dans cette configuration, il est particulièrement avantageux d'utiliser un ressort 8 qui déplace le palpeur 6 vers la zone de glissement pour améliorer le contact entre la partie rotative 11 et l'élément filaire 7.

Dans tous les cas, il est avantageux d'avoir un palpeur 6 avec une partie rotative pour réduire le frottement de l'élément filaire 7 dans le deuxième anneau 5.

En alternative, lorsque le palpeur 6 atteint la position seuil, il libère un organe d'accrochage différent du palpeur 6. L'organe d'accrochage vient en contact de l'élément filaire. Le déplacement de l'élément filaire sur la zone de glissement cause le déplacement de l'organe d'accrochage ce qui cause le déplacement du bloqueur 3 et l'ouverture du premier anneau 1. Cette configuration est moins avantageuse que la précédente car l'organe d'accrochage n'est pas formé par le palpeur 6 ce qui impose d'installer un élément supplémentaire dans le connecteur.

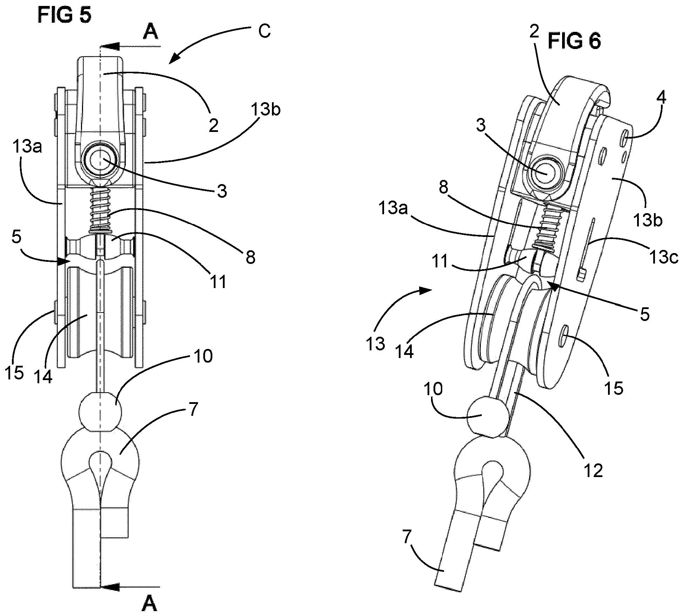

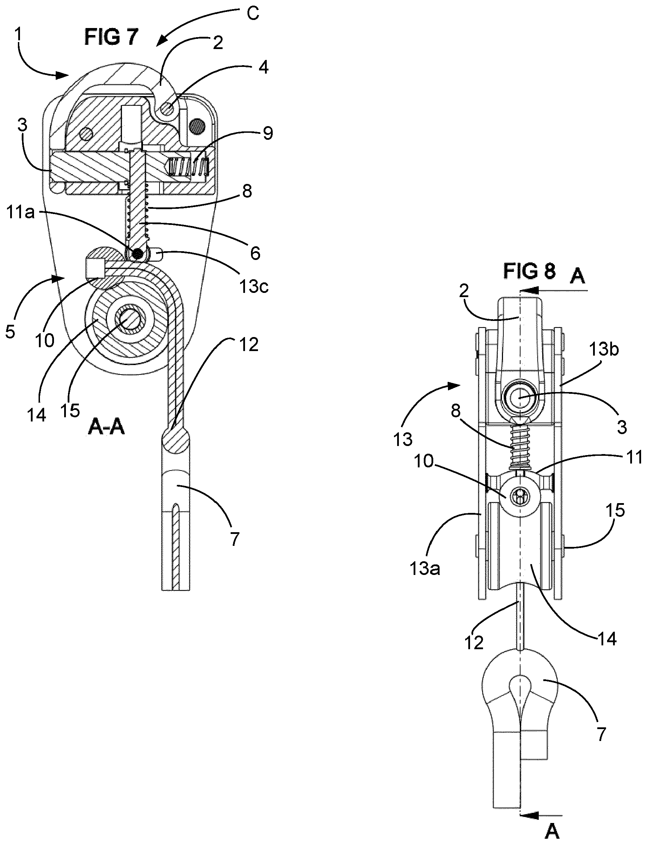

Dans encore un autre mode de réalisation illustré aux figures 6 à 12, l'élément filaire 7 est associé à un cochonnet de récupération 10. L'élément filaire 7 possède une dimension latérale supérieure à la distance seuil et le cochonnet de récupération 10 possède une dimension latérale supérieure à la distance seuil. L'élément filaire 7 et le cochonnet de récupération 10 sont séparés par un deuxième élément filaire 12 qui possède une dimension latérale inférieure à la distance seuil. Dans cette configuration, l'élément filaire 7 se déplace dans le deuxième anneau 5 jusqu'à ce que le deuxième élément filaire 12 atteigne la zone de glissement comme cela est illustré aux figures 4 à 6. Le palpeur 6 atteint la position seuil avec un déplacement selon la première direction. Ensuite, le cochonnet de récupération 10 vient en contact du palpeur 6 et la traction appliquée sur l'élément filaire 7 cause le déplacement du palpeur 6 selon la deuxième direction sécante à la première direction comme illustré aux figures 7 à 12. Le déplacement du palpeur 6 cause le déplacement du bloqueur 3 et l'ouverture du premier anneau 1. Les deux directions de déplacement du palpeur 6 peuvent être définies au moyen de deux rainures 13c formées dans le corps 13 et illustrées aux figures 3, 6 et 9. Les rainures 13c peuvent être des rainures traversantes et le palpeur 6 peut déboucher sur la paroi externe des flasques 13a et/ou 13b de manière à faciliter la manipulation du palpeur 6 pour le montage de l'élément filaire 7 dans le connecteur. L'effort appliqué sur l'élément filaire 7 pour l'extraire hors du connecteur est appliqué sur le palpeur 6 qui se déplace vers l'arrière du connecteur ce qui déplace le bloqueur 3 et ouvre le premier anneau 1. Le cochonnet de récupération peut avoir une forme quelconque.

Dans une autre configuration, le cochonnet de récupération 10 coopère avec un élément du connecteur qui est différent du palpeur 6 pour obtenir le déplacement du bloqueur 3 et l'ouverture du premier anneau 1. Par exemple, le connecteur possède un corps 13 à l'intérieur duquel se trouvent le deuxième anneau 5 et le palpeur 6. Le cochonnet de récupération 10 peut être plus large que le deuxième anneau 5 de sorte que le cochonnet peut ne pas être en mesure de venir en contact du palpeur 6. Le cochonnet de récupération 10 peut alors venir en appui du corps 13, par exemple en appui sur un élément qui est connecté mécaniquement au bloqueur 3. Le mouvement appliqué par le cochonnet de récupération 10 déplace l'élément par rapport au reste du corps 13 ce qui permet de déplacer le bloqueur 3 pour ouvrir le premier anneau 1.

Dans une configuration particulière, le palpeur 6 et le bloqueur 3 forment un élément monobloc. Pour déplacer le bloqueur 3, une fois la position seuil atteinte, il est avantageux de prévoir que le déplacement du palpeur 6 soit une translation et que la translation du palpeur 6 se traduise par une translation du bloqueur 3 comme cela est illustré. Le palpeur est alors en mesure d'avoir deux déplacements consécutifs dont un seul entraine le déplacement du bloqueur 3. Dans une alternative de réalisation, le déplacement du palpeur 6 est une rotation qui est associée à une rotation du bloqueur 3. Le palpeur 6 et le bloqueur 3 sont montés, par exemple, sur un arbre de rotation.

Il est avantageux d'avoir deux actions successives pour avoir le déverrouillage du bloqueur 3 puis l'ouverture du premier anneau ce qui augmente la sécurité. Il est également avantageux d'utiliser une action de la corde pour ouvrir le premier anneau car la corde est encore connectée au connecteur. Cette solution est préférable à l'utilisation d'une corde distincte pour l'ouverture de l'anneau.

Dans un mode de réalisation particulier illustré aux figures 1 à 12, le deuxième anneau 5 possède une zone de glissement qui est formée par une poulie. De cette manière, l'élément filaire peut glisser dans le deuxième anneau 5 sans frottement.

Le connecteur peut être formé par un corps possédant deux flasques opposés. Les deux flasques opposés forment une partie du deuxième anneau 5. Un des deux flasques ou les deux flasques définissent avantageusement une ou plusieurs rainures à l'intérieur desquelles se déplace le palpeur 6.

La zone de glissement peut être formée par une poulie 14 montée à rotation par rapport à un arbre de rotation 15 qui est perpendiculaire à au moins un des flasques. La poulie 14 est montée entre les deux flasques. Le palpeur 6 est monté entre les deux flasques 13a, 13b du corps 13. Lorsque la tige 2 est montée à rotation, il est préférable de prévoir que l'arbre de rotation 4 soit monté sécant aux deux flasques 13a et 13b. L'arbre de rotation 4 est avantageusement fixé aux deux flasques 13a et 13b.

Les deux flasques 13 a et 13b sont avantageusement parallèles entre eux.

Lorsqu'un ressort 8 est utilisé pour déplacer le palpeur 6 vers la zone de glissement, il est préférable de fixer une extrémité du ressort 8 au corps 13.

Il est avantageux de former une fausse fourche qui comporte un connecteur selon l'un des différents modes de réalisation précédents. Le connecteur est associé à un élément filaire additionnel 16, par exemple une sangle ou une corde. L'élément filaire additionnel 16 fait le tour d'une branche ou d'un tronc pour définir un point d'ancrage. De manière préférentielle, une des extrémités de l'élément filaire additionnel 16 est monté fixement sur le connecteur alors que l'autre extrémité est fixée au premier anneau 1 ouvrable. De cette manière, une fois le premier anneau 1 ouvert, l'élément filaire additionnel 16 reste toujours fixé au connecteur. Il est également possible de prévoir que les deux extrémités de la boucle définie par l'élément filaire additionnel 16 soient fixées dans le premier anneau 1, mais ce mode de réalisation est moins avantageux car l'élément filaire additionnel 16 peut plus facilement rester coincé dans l'arbre.

Dans un mode de réalisation particulier, la fausse fourche comporte un dispositif de blocage 17 de l'élément filaire additionnel 16 qui est configuré pour définir la longueur de la boucle qui passe autour du tronc ou d'une branche.

De manière avantageuse, le dispositif de blocage comporte un corps qui définit deux rainures traversantes pour un brin de l'élément filaire additionnel 16. De manière avantageuse, au moins une des rainures n'est pas rectiligne de manière à imposer un frottement sur l'élément filaire additionnel 16 et fixer la longueur de la boucle. Le dispositif de blocage 17 permet d'éviter que l'élément filaire additionnel 16 ne serre la branche ou le tronc. Cela permet notamment de moduler la position du connecteur par rapport aux branches et au tronc et donc de mieux placer le connecteur pour réduire les frottements.

Il est avantageux de former un dispositif de remontée sur élément filaire qui comporte une fausse fourche telle que celle décrite précédemment en association avec un élément filaire qui passe dans le deuxième anneau 5 du connecteur. Il est particulièrement avantageux de prévoir que l'élément filaire 7 soit associé à un cochonnet de récupération 10.

Le fonctionnement du connecteur peut être présenté de la manière suivante. Un connecteur selon l'un des modes de réalisation précédents est fourni. Un élément filaire 7 est présent dans le deuxième anneau 5. Le premier anneau 1 est fermé. L'élément filaire 7 possède une dimension latérale supérieure à la position seuil du palpeur 6 de sorte que le bloqueur 3 empêche l'ouverture du premier anneau 1.

L'élément filaire coulisse dans le deuxième anneau 5 jusqu'à ce que le palpeur 6 atteigne la position seuil. Il est alors possible de déplacer le bloqueur 3 depuis la première position jusqu'à la deuxième position. Le bloqueur 3 est déplacé pour autoriser l'ouverture du premier anneau 1. L'ouverture du premier anneau 1 peut être automatique ou causée par le poids du connecteur ou par la force exercée par l'élément filaire.

De manière avantageuse, l'élément filaire coulisse jusqu'à ce que le cochonnet de récupération 10 cause le déplacement du palpeur 6 et donc le déplacement du bloqueur 3 pour ouvrir le premier anneau 1. Il est particulièrement avantageux de prévoir que le palpeur 6 intervienne dans le blocage du premier anneau 1 puis ensuite dans le déplacement du bloqueur 3 pour l'ouverture du premier anneau 1. Ainsi, le même élément est utilisé pour deux actions différentes ce qui facilite la réalisation du connecteur en limitant le nombre d'éléments intervenant dans le blocage et le déblocage du premier anneau 1. Pour renforcer la sécurité d'utilisation, il est particulièrement avantageux d'utiliser le mode de réalisation dans lequel le palpeur 6 suit deux mouvements sécants consécutifs pour quitter une position dans laquelle le bloqueur 3 reste dans une position de blocage jusqu'à une position où le bloqueur 3 peut se déplacer et le déplacement du palpeur 6 cause le déplacement du bloqueur 3.

Dans les modes de réalisation précédents, le connecteur est utilisé pour réaliser de l'élagage. Cependant, d'autres applications sont possibles où il est nécessaire d'avoir un connecteur ouvrable à distance. Le connecteur peut être utilisé pour former un point d'ancrage largable à distance, par exemple en spéléologie, en canyoning ou dans d'autres activités professionnelles.

## Revendications

1. Connecteur comportant :
- un premier anneau (1) monté ouvrable et muni d'un bloqueur (3) coopérant avec une tige (2), la tige (2) étant montée mobile entre une première position de tige (2) où le premier anneau (1) est fermé et une deuxième position de tige (2) où le premier anneau (1) est ouvert, le bloqueur (3) étant monté mobile entre une première position de bloqueur (3) coopérant avec la tige (2) dans la première position de tige (2) pour maintenir fermé le premier anneau (1) et une deuxième position de bloqueur (3) autorisant l'ouverture du premier anneau (1) ;
- un deuxième anneau (5) distinct du premier anneau (1) et destiné à recevoir un élément filaire (7), **caractérisé en ce que** deuxième anneau (5) est à section variable au moyen d'un palpeur (6), le palpeur (6) étant monté mobile par rapport à une zone de glissement du deuxième anneau (5) pour mesurer une épaisseur de l'élément filaire (7) circulant entre la zone de glissement et le palpeur (6); et **en ce que** le palpeur (6) est connecté au bloqueur (3) de sorte que lorsque la distance entre le palpeur (6) et la zone de glissement est supérieure à une valeur seuil, le palpeur (6) maintient le bloqueur (3) dans la première position de bloqueur (3) et lorsque la distance entre le palpeur (6) et la zone de glissement est inférieure à une valeur seuil, le palpeur (6) autorise le déplacement du bloqueur (3) vers la deuxième position de bloqueur (3).

2. Connecteur selon la revendication 1, dans lequel un ressort (8) est configuré pour déplacer le palpeur (6) vers la zone de glissement.

3. Connecteur selon l'une des revendications 1 et 2, dans lequel la tige (2) est mobile en rotation entre la première position de tige (2) et la deuxième position de tige (2).

4. Connecteur selon l'une quelconque des revendications 1 à 3, dans lequel le palpeur (6) est mobile en translation selon une première direction au-delà de la distance seuil et mobile en translation selon une deuxième direction sécante à la première direction à la distance seuil et dans lequel la translation du palpeur (6) selon la deuxième direction cause le déplacement du bloqueur (3) entre la première position et la deuxième position de bloqueur (3).

5. Connecteur selon l'une quelconque des revendications 1 à 4, dans lequel la zone de glissement est formée par une poulie (14).

6. Connecteur selon l'une quelconque des revendications 1 à 5, comportant un élément filaire additionnel (16) ayant une première extrémité fixée à un corps (13) muni du premier anneau (1) ouvrable et du deuxième anneau (5) distinct, l'élément filaire additionnel (16) ayant une deuxième extrémité fixée au premier anneau (1) ouvrable.

7. Fausse fourche comportant un connecteur selon la revendication précédente et un dispositif de blocage (17) de deux brins de l'élément filaire additionnel (16) pour définir un anneau d'élément filaire additionnel (16).

8. Dispositif de remontée sur élément filaire comportant une fausse fourche selon la revendication précédente et un élément filaire (7) associé à un cochonnet de récupération (10), l'élément filaire (7) passant à travers le deuxième anneau (5), l'élément filaire (7) possédant une dimension latérale supérieure à la distance seuil, le cochonnet de récupération (10) possédant une dimension latérale supérieure à la distance seuil et le cochonnet de récupération (10) étant séparé de l'élément filaire (7) par un deuxième élément filaire (12) ayant une dimension latérale inférieure à la distance seuil.

9. Procédé d'utilisation d'un dispositif de remontée sur élément filaire (7) comportant les étapes suivantes :
- fournir un dispositif de remontée sur élément filaire (7) selon la revendication précédente ;
- déplacer l'élément filaire (7) dans le deuxième anneau (5) de sorte que palpeur (6) quitte l'élément filaire (7) pour le deuxième élément filaire (12) et que le bloqueur (3) autorise l'ouverture du premier anneau (1) ouvrable.

10. Procédé d'utilisation d'un dispositif de remontée sur élément filaire (7) selon la revendication précédente dans lequel l'élément filaire (7) est associé à un cochonnet de récupération et dans lequel un effort appliqué sur l'élément filaire pour extraire l'élément filaire hors du connecteur entraine la mise en contact du cochonnet de récupération avec le palpeur (6) et le déplacement du palpeur (6) vers l'arrière du connecteur pour ouvrir le premier anneau (1).

## Patentansprüche

1. Verbinder, umfassend:
- einen ersten Ring (1), der öffenbar montiert und mit einer Haltevorrichtung (3) versehen ist, die mit einer Stange (2) zusammenwirkt, wobei die Stange (2) zwischen einer ersten Position der Stange (2), in welcher der erste Ring (1) geschlossen ist, und einer zweiten Position der Stange (2), in welcher der erste Ring (1) offen ist, beweglich angebracht ist, wobei die Haltevorrichtung (3) zwischen einer ersten Position der Haltevorrichtung (3), die mit der Stange (2) in der ersten Position der Stange (2) zusammenwirkt, um den ersten Ring (1) geschlossen zu halten, und einer zweiten Position der Haltevorrichtung (3), die das Öffnen des ersten Rings (1) zulässt, beweglich angebracht ist;
- einen zweiten Ring (5), der vom ersten Ring (1) getrennt ist und dazu bestimmt ist, ein seilartiges Element (7) aufzunehmen, **dadurch gekennzeichnet, dass** der zweite Ring (5) mittels eines Tasters (6) einen variablen Querschnitt hat, wobei der Taster (6) in Bezug auf eine Gleitzone des zweiten Rings (5) beweglich angebracht ist, um eine Dicke des seilartigen Elements (7), das zwischen der Gleitzone und dem Taster (6) umläuft, zu messen;
und dadurch, dass der Taster (6) derart mit der Haltevorrichtung (3) verbunden ist, dass der Taster (6) die Haltevorrichtung (3) in der ersten Position der Haltevorrichtung (3) hält, wenn der Abstand zwischen dem Taster (6) und dem Gleitbereich größer als ein Schwellenwert ist, und der Taster (6) die Bewegung der Haltevorrichtung (3) in die zweite Position der Haltevorrichtung (3) zulässt, wenn der Abstand zwischen dem Taster (6) und dem Gleitbereich kleiner als ein Schwellenwert ist.

2. Verbinder nach Anspruch 1, wobei eine Feder (8) dazu konfiguriert ist, den Taster (6) zum Gleitbereich hin zu bewegen.

3. Verbinder nach einem der Ansprüche 1 oder 2, wobei die Stange (2) zwischen der ersten Position der Stange (2) und der zweiten Position der Stange (2) drehbeweglich ist.

4. Verbinder nach einem der Ansprüche 1 bis 3, wobei der Taster (6) in einer ersten Richtung über den Schwellenabstand hinaus translationsbeweglich ist und in einer zweiten Richtung, die die erste Richtung im Schwellenabstand schneidet, translationsbeweglich ist, und wobei die Translationsbewegung des Tasters (6) in der zweiten Richtung die Bewegung der Haltevorrichtung (3) zwischen der ersten Position und der zweiten Position der Haltevorrichtung (3) bewirkt.

5. Verbinder nach einem der Ansprüche 1 bis 4, wobei der Gleitbereich durch eine Rolle (14) gebildet wird.

6. Verbinder nach einem der Ansprüche 1 bis 5, umfassend ein zusätzliches seilartiges Element (16) mit einem ersten Ende, das an einem Körper (13) befestigt ist, der mit dem ersten öffenbaren Ring (1) und dem separaten zweiten Ring (5) versehen ist, wobei das zusätzliche seilartige Element (16) ein zweites Ende hat, das am ersten öffenbaren Ring (1) befestigt ist.

7. Kambiumschoner mit einem Verbinder nach dem vorherigen Anspruch und einer Klemmvorrichtung (17) für zwei Stränge des zusätzlichen seilartigen Elements (16), um einen Ring des zusätzlichen seilartigen Elements (16) zu definieren.

8. System für den Aufstieg an einem seilartigen Element, umfassend einen Kambiumschoner nach dem vorherigen Anspruch und ein seilartiges Element (7), das mit einer Abziehkugel (10) verbunden ist, wobei das seilartige Element (7) durch den zweiten Ring (5) verläuft und das seilartige Element (7) eine Querabmessung hat, die größer als der Schwellenabstand ist, die Abziehkugel (10) eine Querabmessung hat, die größer als der Schwellenabstand ist, und die Abziehkugel (10) durch ein zweites seilartiges Element (12), dessen Querabmessung kleiner als der Schwellenabstand ist, vom seilartigen Element (7) getrennt ist.

9. Verfahren zur Verwendung eines Systems für den Aufstieg an einem seilartigen Element (7), umfassend die folgenden Schritte:
- Bereitstellen eines Systems für den Aufstieg an einem seilartigen Element (7) nach dem vorherigen Anspruch;
- Bewegen des seilartigen Elements (7) im zweiten Ring (5) derart, dass der Taster (6) das seilartige Element (7) zum zweiten seilartigen Element (12) hin verlässt und die Haltevorrichtung (3) die Öffnung des ersten öffenbaren Rings (1) zulässt.

10. Verfahren zur Verwendung eines Systems für den Aufstieg an einem seilartigen Element (7) nach dem vorherigen Anspruch, wobei das seilartige Element (7) mit einer Abziehkugel verbunden ist, und wobei eine Kraft, die auf das seilartige Element angelegt wird, um das seilartiges Element aus dem Verbinder herauszuziehen, bewirkt, dass die Abziehkugel mit dem Taster (6) in Kontakt gebracht wird und der Taster (6) zur Rückseite des Verbinders bewegt wird, um den ersten Ring (1) zu öffnen.

## Claims

1. Connector comprising:
- a first ring (1) fitted openable and provided with a blocker (3) collaborating with a rod (2), the rod (2) being fitted movable between a first position of the rod (2) where the first ring (1) is closed and a second position of the rod (2) where the first ring (1) is open, the blocker (3) being fitted movable between a first position of the blocker (3) collaborating with the rod (2) in the first position of the rod (2) to keep the first ring (1) closed and a second position of the blocker (3) allowing opening of the first ring (1);
- a second ring (5) distinct from the first ring (1) and designed to receive a wire part (7), **characterized in that** the second ring (5) has a variable cross-section, the cross-section varying on account of a probe (6), the probe (6) being fitted movable with respect to a sliding area of the second ring (5) to measure a thickness of the wire part (7) running between the sliding area and the probe (6);
and **in that** the probe (6) is connected to the blocker (3) so that when the distance between the probe (6) and the sliding area is greater than a threshold value, the probe (6) keeps the blocker (3) in the first position of the blocker (3), and when the distance between the probe (6) and the sliding area is lower than a threshold value, the probe (6) allows movement of the blocker (3) to the second position of the blocker (3).

2. Connector according to claim 1, wherein a spring (8) is configured to move the probe (6) to the sliding area.

3. Connector according to one of claims 1 and 2, wherein the rod (2) is movable in rotation between the first position of the rod (2) and the second position of the rod (2).

4. Connector according to any one of claims 1 to 3, wherein the probe (6) is movable in translation in a first direction beyond the threshold distance and movable in translation in a second direction secant to the first direction at the threshold distance, and wherein translation of the probe (6) in the second direction results in movement of the blocker (3) between the first and the second positions of the blocker (3).

5. Connector according to any one of claims 1 to 4, wherein the sliding area is formed by a pulley (14).

6. Connector according to any one of claims 1 to 5, comprising an additional wire part (16) having a first end fixed to the body (13) provided with the openable first ring (1) and the distinct second ring (5), the additional wire part (16) having a second end fixed to the openable first ring (1).

7. Cambium saver comprising a connector according to the foregoing claim and a blocking device (17) of two strands of the additional wire part (16) to define a ring of an additional wire part.

8. Hoisting device for hoisting on a wire part comprising a cambium saver according to the foregoing claim and a wire part (7) associated with a retrieval ball (10), the wire part (7) passing through the second ring (5), the wire part (7) having a larger lateral dimension than the threshold distance, the retrieval ball (10) having a larger lateral dimension than the threshold distance and the retrieval ball (10) being separated from the wire part (7) by a second wire part (12) having a smaller lateral dimension than the threshold distance.

9. Method for using a hoisting device for hoisting a wire part (7) comprising the following steps:
- providing a hoisting device for hoisting a wire part (7) according to the foregoing claim;
- moving the wire part (7) in the second ring (5) so that the probe (6) leaves the wire part (7) to the second wire part (12) and that the blocker (3) allows opening of the openable first ring (1).

10. Method for using a hoisting device on a wire part (7) according to the foregoing claim, wherein the wire part (7) collaborates with a retrieval ball and wherein a force applied on the wire part to extract the wire part from the connector results in the retrieval ball coming into contact with the probe (6) and in movement of the probe (6) to the rear of the connector to open the first ring (1).
